# EUROPÄISCHE PATENTSCHRIFT

(11) **EP 3 361 593 B1**
(45) Veröffentlichungstag und Bekanntmachung des Hinweises auf die Patenterteilung: **30.10.2019**
(21) Anmeldenummer: 18150407.7
(22) Anmeldetag: 05.01.2018
(51) Int. Cl.: H02J 3/32, H02J 9/06

(54) **UNTERBRECHUNGSFREIE STROMVERSORGUNG FÜR LASTEN**
UNINTERRUPTIBLE POWER SUPPLY FOR LOADS
ALIMENTATION ÉLECTRIQUE SANS INTERRUPTION POUR CHARGES ÉLECTRIQUES

(30) Priorität: 13.02.2017 DE 102017102739
(43) Veröffentlichungstag der Anmeldung: 15.08.2018
(73) Patentinhaber: RWE Supply & Trading GmbH, 45141 Essen (DE)
(72) Erfinder: Schwarz, Dr. Hans-Günter, 45549 Sprockhövel (DE); Pham, Viet Dung, 45307 Essen (DE)
(74) Vertreter: Cohausz & Florack

(56) Entgegenhaltungen:
- WO-A1-2008/015502
- WO-A1-2016/029128
- DE-A1-102011 055 231
- DE-U1-202014 100 723
- US-A1- 2014 368 042

## Beschreibung

Der Gegenstand betrifft eine unterbrechungsfreie Stromversorgung (USV), ein Verfahren zum Betreiben einer USV sowie ein System mit einer USV.

Unterbrechungsfreie Stromversorgungen (USV) bzw. im Englischen "uninterruptible power supply" (UPS) werden eingesetzt, um bei Störungen im elektrischen Versorgungsnetz die Versorgung kritischer elektrischer Lasten sicherzustellen.

Elektrische Versorgungsnetze sind unterschiedlichsten Betriebsbedingungen ausgesetzt und es kann sowohl zu Frequenzschwankungen als auch zu Spannungsschwankungen kommen. Insbesondere bei schnellen Veränderungen in der Lastsituation oder der Einspeisesituation entlang eines Versorgungsstrangs in einem elektrischen Versorgungsnetz kann es zu Spannungsschwankungen an der Last kommen. Bei übergeordneten Veränderungen der Einspeisebedingungen oder Lastbedingungen kann es auch zu Frequenzschwankungen in den Niederspannungsnetzen kommen.

Einige elektrische Verbraucher sind jedoch nicht dazu ausgelegt, mit solchen unterschiedlichsten Netzbedingungen betrieben zu werden. Um solche Verbraucher sicher betreiben zu können, existieren unterschiedlichste USV Topologien.

Die DE 20 2014 100 723 U1 beschreibt eine unterbrechungsfreie Stromversorgung, welche modular aufgebaut ist und netzseitig einen Hauptanschluss und einen Umgehungsanschluss aufweist. Hierüber kann ein Lastanschluss entweder mit dem Energiespeicher oder unmittelbar über den Umgehungsanschluss mit dem Netz verbunden werden.

Nach IEC 62040-3 sind drei verschiedene Kategorien von USVen definiert. USVen der Kategorie 3 sind spannungs- und frequenzabhängig ("voltage and frequency dependent" (VFD)). Bei diesen wird im Normalbetrieb ein Netzanschluss unmittelbar auf einen Lastanschluss geschaltet. Im Störbetrieb schaltet ein am Lastanschluss angeordneter Schalter, insbesondere ein Schaltschütz auf einen Batteriebetrieb um und eine Batterie wird über einen Wechselrichter mit dem Lastausgang verbunden. Die Batterie wird von dem Netzanschluss über einen Gleichrichter geladen.

USVen der Kategorie 2 sind spannungsunabhängig und frequenzabhängig (voltage independent (VI)). Bei diesen wird die die Last im Normalbetrieb vom Netz versorgt. Durch einen automatischen Spannungsregler (automatic voltage regulator(AVR)) wird am Lastausgang stets eine konstante Spannung ermöglicht. Die Frequenz am Lastausgang ist jedoch weiterhin abhängig von der Frequenz des Versorgungsnetzes. Wenn die Netzspannung den Toleranzbereich verlässt, versorgt die Batterie die Last über einen Wechselrichter.

USVen der Kategorie 1 sind spannungsunabhängig und frequenzunabhängig (voltage and frequency independent (VFI)). Bei diesen ist der Netzanschluss zunächst über einen Gleichrichter und einen Wechselrichter mit einem Lastausgang verbunden sind und die Batterie zwischen dem Gleichrichter und dem Wechselrichter angeordnet. Durch den Wechselrichter wird stets eine konstante Spannung mit einer konstanten Frequenz an dem Lastausgang zur Verfügung gestellt. Für einen Notfallbetrieb, in dem in der USV ein Fehler auftritt, ist noch ein automatischer Bypass vorgesehen, der den Lastausgang mit dem Versorgungsnetz verschalten kann. Im Wartungsbetrieb kann die Last direkt vom Netz über den Wartungsbypass versorgt werden. Dafür wird der Wartungsschalter manuell bzw. automatisch geschlossen.

Die beschriebenen USV Topologien lassen sich zudem redundant betreiben. Insbesondere können Rechenzentren redundant versorgt werden, indem diese über zwei voneinander getrennte Netzanschlüsse mit Versorgungsnetzen verbunden sind. Insbesondere können ein automatischer Bypass und ein Wartungsbypass einer Kategorie 1 USV über einen zweiten Netzanschluss mit einem elektrischen Versorgungsnetz verbunden sein.

Zur Absicherung gegenüber längeren Netzausfällen können die Batterien größer dimensioniert werden und somit eine erhöhte Speicherkapazität aufweisen. Die Batterien oder auch andere Energiespeicher, können dabei mehrere 100kWh aufweisen. Der Betrieb bzw. das Vorhalten gerade solcher groß dimensionierten Energiespeicher ist nachteilig, da sie höchst selten zum Einsatz kommen. Die Netzqualität in Westeuropa ist derart gut, dass die USV nur höchst selten zum Einsatz kommt. Die meiste Zeit des Jahres sind die Energiespeicher ungenutzt und werden nur nachgeladen, um deren Ladung zu erhalten. Die Ladeleistung der herkömmlichen Energiespeicher ist im Vergleich zu Speicherkapazität sehr gering, normalerweise 0,2xC10 und damit beispielsweise für Netzdienstleistungen nicht geeignet.

Somit lag dem Gegenstand die Aufgabe zugrunde, Energiespeicher von USVen einer Mehrfachnutzung zuzuführen.

Diese Aufgabe wird gegenständlich durch eine unterbrechungsfreie Stromversorgung nach Anspruch 1, ein Verfahren nach Anspruch 9 sowie ein System nach Anspruch 15 zur Verfügung gestellt.

Es ist erkannt worden, dass durch eine geeignete Verschaltung der elektrischen Komponenten innerhalb einer USV deren Energiespeicher für Netzdienstleistungen (z. B. Primärregelleistung), zur Teilnahme am Strommarkt und/oder zum Peak Shaving eingesetzt werden können. Der Energiespeicher ist zur Bereitstellung elektrische Energie gebildet.

Es ist erkannt worden, dass die Energiespeicher nicht nur zur Versorgung der Last in einem Störungsfall genutzt, sondern auch netzdienlich betrieben werden können. Hierzu können die Energiespeicher netzdienlich beladen bzw. entladen werden. So kann ein Leistungsfluss in Richtung Energiespeicher fließen oder aus dem Energiespeicher in Richtung der Last und/oder eines Netzanschlusses bzw. Versorgungsnetzes. Die Regelung des Leistungsflusses an dem Energiespeicher kann dabei frequenzabhängig, spannungsabhängig und/oder lastabhängig sein und/oder extern getriggert sein.

Eine frequenzabhängige Regelung des Leistungsflusses an dem der Energiespeicher kann beispielsweise für Primärregelleistung genutzt werden.

Eine lastsabhängige Regelung des Leistungsflusses am Energiespeicher kann beispielsweise für Peak Shaving genutzt werden.

Eine externe Triggerung kann beispielsweise zur Bereitstellung von Minutenreserven oder Sekundenreserven dienen.

Es versteht sich, dass bei einem Leistungsfluss aus dem Energiespeicher der Energiespeicher entladen wird und bei einem Leistungsfluss zum Energiespeicher der Energiespeicher geladen wird.

Es gibt verschiedene Szenarien, den Energiespeicher zu laden oder zu entladen. Das Laden des Energiespeichers kann z.B. dann erfolgen, wenn eine aus dem Versorgungsnetz bezogene elektrische Leistung größer ist, als die Leistung der Last. Dadurch kann z.B. bei einer erhöhten Netzfrequenz eine Frequenzregelung erfolgen. Elektrische Leistung wird somit von dem Versorgungsnetz sowohl für das Laden des Energiespeichers als auch für das Betreiben der Last genutzt.

Das Entladen des Energiespeichers, insbesondere bei geringen Netzfrequenzen, kann dazu führen, dass die Leistung der Last teilweise durch den Energiespeicher und teilweise durch das Versorgungsnetz gespeist wird. Auch kann z. B. der Energiespeicher so entladen werden, dass die Leistung der Last vollständig gespeist wird und vorzugsweise zusätzlich ein elektrischer Leistungsfluss in Richtung des Versorgungsnetzes fließt.

Eine redundant ausgeführte USV verfügt vorzugsweise über zwei getrennt voneinander betriebene Netzanschlüsse. Ein erster Netzanschluss ist über einen Gleichrichter und eine Wechselrichter mit einem Lastanschluss verbunden. Ein zweiter Netzanschluss ist vorzugsweise über einen automatischen Bypass mit dem Lastanschluss verbunden. Hierbei kann in dem Bypass eine Schaltkomponente angeordnet sein, insbesondere ein Thyristorschalter. Die beiden Netzanschlüsse sind vorzugsweise an insbesondere voneinander unabhängig betriebenen Strängen eines elektrischen Versorgungsnetzes angeschlossen. Hierbei können die Stränge vorzugsweise an voneinander unabhängig betriebenen Transformatoren angeschlossen sein, die mit einem übergeordneten Versorgungsnetz, insbesondere in einer anderen, höheren Spannungsebene verbunden sind. Auch können die Netzanschlüsse an einem gemeinsamen Einspeisepunkt angeschlossen sein. Vorzugsweise sind die Versorgungsnetze niederspannungsseitig bei einer Spannungsebene bis 0,4kV betrieben und mittelspannungsseitig bei einer Spannung zwischen 1kV und 65kV.

Die Energiespeicher sind vorzugsweise zyklenfeste Batterien, die mehr als 200 Ladezyklen, insbesondere mehr als 1000 Ladezyklen aushalten. Dies sind insbesondere Lithium-Ionen-Batterien. Ferner können die Energiespeicher dazu ausgelegt sein, hohe Lade- und Entladeströme zu realisieren. Insbesondere sind Ströme von mehr als 1C, insbesondere bis zu 10C möglich.

Vorzugsweise ist die unterbrechungsfreie Stromversorgung derart geschaltet, dass ein Entladen der Energiespeicher für einen Leistungsfluss in Richtung eines der Netzanschlüsse ermöglicht ist und gleichzeitig ein Entladen des Energiespeichers in Richtung des Lastanschlusses möglich ist. Es ist jedoch auch möglich, dass exklusiv entweder ein Entladen der Energiespeicher für einen Leistungsfluss in Richtung eines der Netzanschlüsse ermöglicht ist oder ein Entladen des Energiespeichers in Richtung des Lastanschlusses erfolgt.

Für den Betrieb kann es sinnvoll sein, den Gleichrichter schaltbar an den ersten Netzanschluss anzuschließen. Hierzu kann ein Schalter zwischen dem ersten Netzanschluss und dem Gleichrichter angeordnet sein.

Ferner ist es möglich, den Lastanschluss von dem Wechselrichter und der Schaltkomponente zu trennen. Hierzu kann am Ausgang des Lastanschlusses ebenfalls ein Schalter vorgesehen sein. Auch können zwei Schalter am Ausgang des Lastanschlusses vorgesehen sein. Dabei kann der Wartungsbypass zwischen diesen beiden Schaltern angeschlossen sein.

Schließlich kann es auch sinnvoll sein, die Schaltkomponente im automatischen Bypass von dem zweiten Netzanschluss zu trennen. Hierfür kann zwischen dem zweiten Netzanschluss und der Schaltkomponente ein Schalter vorgesehen sein.

Die Schalter sind vorzugsweise Schließer oder Öffner. Die Schalter sind vorzugsweise in Wirkverbindung mit einer Steuereinheit. Neben einer in der USV angeordneten Steuereinheit kann auch ein Fernwirkgerät vorgesehen sein, über dass Steuerbefehle in die USV eingespeist werden können. Das Fernwirkgerät kann mit der Steuereinheit zusammenwirken. Dabei können Leistungswerte für das Laden und/oder Entladen des Energiespeichers extern vorgegeben werden. Auch kann ein Batteriemanagementsystem zu Laden/Entladen des Energiespeichers vorgesehen sein, welches ebenfalls mit der Steuereinheit und/oder dem Fernwirkgerät zusammenwirken kann.

Um eine zusätzliche Redundanz in der USV zu ermöglichen, wird auch vorgeschlagen, dass ein Wartungsbypass parallel zu dem automatischen Bypass zwischen dem Lastanschluss und dem zweiten Netzanschluss vorgesehen ist. Vorzugsweise ist der Wartungsbypass ausgangsseitig des Schalters am Lastanschluss angeschlossen, wohingegen der Pfad der elektrischen Schaltkomponente eingangsseitig des Schalters an dem Lastanschluss angeschlossen sein kann. In dem Wartungsbypass kann ein elektrischer Schalter vorgesehen sein.

In dem Wartungsbypass kann vorzugsweise ein Strommessgerät, insbesondere ein Smart Meter angeordnet sein. Dies kann sinnvoll sein, da über den Wartungsbypass ein Leistungsfluss von dem Energiespeicher zu dem zweiten Versorgungsnetz erfolgen kann. In diesem Fall besteht ein unmittelbarer Anschluss des Energiespeichers an das Versorgungsnetz und ein Strommessgerät kann sinnvoll sein.

Alternativ oder kumulativ kann ein Strommessgerät, insbesondere ein Smart Meter an dem Energiespeicher angeordnet sein und den Leistungsfluss von und zu dem Energiespeicher, insbesondere auch in einer zeitlichen Auflösung, erfassen.

Die elektrische Schaltkomponente ist vorzugsweise aus Halbleiterschaltern gebildet, die sehr schnell schalten können. Insbesondere können Thyristorschalter zum Einsatz kommen. Die Schaltkomponente kann auch beispielsweise ein bidirektionaler Wechselstromumrichter sein. Auch kann die elektrische Schaltkomponente aus einer Reihenschaltung aus einem Gleichrichter und einem Wechselrichter gebildet sein. In diesem Fall ist die USV entlang beider Stränge eine Kategorie 1 USV, mit einer Frequenz- und Spannungsunabhängigkeit an dem Lastanschluss.

Der Energiespeicher kann aus einer Parallelschaltung von zumindest zwei Speichersträngen gebildet sein. Hierdurch lässt sich die Speicherkapazität des Energiespeichers nahezu beliebig erhöhen. Jeder Speicherstrang kann dabei getrennt voneinander über zumindest einen Gleichspannungswandler mit dem Gleichrichter verbunden sein. Über die Gleichspannungswandler ist es möglich, zwischen den einzelnen Speichersträngen ein Lademanagement durchzuführen. Einzelne Stränge des Energiespeichers bzw. einzelne Speicherzellen können wahlfrei be- und entladen werden. Auch ist ein Ausgleich der Speicherladung zwischen den einzelnen Speicherzellen über den Gleichspannungswandler möglich. Darüber hinaus kann mittels der Gleichspannungswandler unabhängig von einem an dem ersten Netzanschluss angeordneten Umrichter das Laden und Entladen der Energiespeicher gesteuert werden.

Für Primärregelleistung ist es notwendig, dass lokal, d.h. zum Beispiel am Netzanschluss der USV eine Frequenzregelung stattfindet. Diese Frequenzregelung ist vorzugsweise unabhängig von externen Stellsignalen. Aus diesem Grunde kann ein Frequenzmessgerät eine Netzfrequenz an zumindest einem der Netzanschlüsse erfassen. Abhängig von der gemessenen Netzfrequenz kann ein elektrischer Leistungsfluss von dem Energiespeicher zu dem zumindest einem Netzanschluss geleitet werden. Vorzugsweise erfolgt eine P, PI oder PID Regelung der Einspeiseleistung und/oder der Frequenz der Einspeisespannung von dem Energiespeicher in Richtung des Netzanschlusses abhängig von der Netzfrequenz. Vorzugsweise ist die Frequenzmessung an beiden Netzanschlüssen vorgesehen, so dass die beiden Versorgungsnetze unabhängig voneinander überwacht werden können und je nach Notwendigkeit kann ein Entladen des Energiespeichers netzdienlich für eines oder beide der Versorgungsnetze erfolgen. Die Frequenz der Einspeisespannung kann abhängig von der gemessenen Frequenz eingestellt werden.

Auch ist es möglich, dass das Frequenzmessgerät mit einer Steuereinheit in Wirkverbindung ist und dass die Steuereinheit die elektrischen Komponenten innerhalb der USV abhängig von der gemessenen Netzfrequenz steuert.

Für eine Minutenreserve oder eine Sekundenreserve kann durch ein externes Steuersignal ein Schalten der elektrischen Komponenten innerhalb der USV durch die Steuereinheit bewirkt werden. Hierzu kann dann die Steuereinheit ein Be- oder Entladen des Energiespeichers bewirken.

Bei Peak Shaving, d.h. zur Reduzierung von Leistungsspitzen bzw. Lastspitzen kann die Steuereinheit ein Entladen des Energiespeichers triggern. Somit kann z. B. die elektrische Last am Lastanschluss zumindest in Teilen durch den Energiespeicher getragen werden.

Vorzugsweise wird der Ladezustand des Energiespeichers überwacht. Insbesondere kann der Ladezustand derart überwacht werden, dass ein zuvor beschriebenes netzdienliches Schalten der USV nur bis zu einem unteren Grenzwert des Ladezustands ermöglichst ist. Insbesondere kann abhängig von der Autarkieanforderung der Last eine Mindest-Reservekapazität als untere Grenze des Ladezustands des Energiespeichers eingestellt sein.

Die Steuereinheit kann die Ladevorgänge, in denen der Energiespeicher netzdienlich entladen wird, zusammen mit einem Zeitstempel abspeichern. Dadurch ist es möglich, den Nachweis zu führen, dass der Energiespeicher netzdienlich betrieben wurde. Insbesondere kann in der Steuereinheit oder dem Frequenzmessgerät zusätzlich die Netzfrequenz abgespeichert werden, um den Nachweis der Primärregelleistungserbringung zu ermöglichen.

Auch ist es möglich, den Umrichter bzw. auch einen Wechselrichter für die Blindleistungskompensation einzusetzen. Hierzu kann über den Umrichter eine Kompensation des Blindstroms in dem Versorgungsnetz erfolgen. Die Blindleistung kann abhängig von einem gemessenen Phasenwinkel zwischen Strom und Spannung an zumindest einem der Netzanschlüsse geregelt werden. Über den Umrichter kann eine Scheinleistung an einen der Netzanschlüsse angelegt werden, deren Phasenwinkel abhängig von dem gemessenen Phasenwinkel an dem Netzanschluss eingestellt sein kann.

Im Normalbetrieb wird die USV derart betrieben, dass über den Umrichter und den Wechselrichter elektrische Leistung von dem ersten Netzanschluss zu dem Lastanschluss fließt. Parallel dazu kann der Energiespeicher über den ersten Netzanschluss geladen werden. Auf der Wechselspannungsseite des Wechselrichters liegt eine konstante Spannung mit einer konstanten Frequenz an. Ein Schalter am Ausgang des Netzanschlusses kann geschlossen sein.

Parallel oder alternativ dazu kann über die Schaltkomponente, die vorzugsweise ein Schalter, ein Wechselstromschalter, ein Thyristorschalter oder dergleichen ist von dem zweiten Netzanschluss ein Leistungsfluss in Richtung des Lastanschlusses fließen. Dies kann insbesondere dann erfolgen, wenn die Spannungs- und Stromqualität des Netzes im Toleranzbereich der Last liegen. Bei Qualitätsproblemen des Netzes, wird die Schaltkomponente deaktiviert. Die Last wird vom ersten Netzanschluss über den Gleichrichter und den Umrichter versorgt

Auch kann beispielsweise ausgangsseitig der Schaltkomponente, wenn diese z.B. aus einer Reihenschaltung aus einem Gleichrichter und einem Wechselrichter oder einem bidirektionalen Wechselstromumrichter gebildet ist, eine konstante Spannung mit einer konstanten Frequenz anliegen. Durch geeignete Einstellung der Schaltkomponente und des Wechselrichters können die Anteile der Stromversorgung für die Last ausgehend von dem ersten und dem zweiten Netzanschluss eingestellt werden. Dies lässt sich beispielsweise über eine Einstellung des Spannungsniveaus erreichen. Der Wartungsbypass ist vorzugsweise geöffnet.

Für einen netzdienlichen Betrieb am zweiten Netzanschluss kann es sinnvoll sein, einen Wartungsbypass zu schließen und die Schaltkomponente zu inaktiveren. Insbesondere kann dabei ein dort angeordneter Schalter geöffnet werden. Im Falle des netzdienlichen Betriebs kann der Umrichter inaktiviert werden oder ein daran angeordneter Schalter geöffnet werden und der Wechselrichter kann abhängig von einer Steuereinheit eine Ausgangsspannung und eine Ausgangsfrequenz einstellen. Über den Wartungsbypass erfolgt somit ein Leistungsfluss in Richtung des zweiten Netzanschlusses mit einer definierten Spannung bei einer definierten Frequenz.

Im Falle des Ladens des Energiespeichers kann der Umrichter aktiviert werden bzw. der Schalter geschlossen werden und der Wechselrichter deaktiviert werden. Der Umrichter kann von einer Steuereinheit derart angesteuert werden, dass die bezogene Leistung von dem ersten Netzanschluss eingestellt ist.

In beiden zuvor beschriebenen Betriebsarten ist der Energiespeicher lediglich für die Stabilisierung der Versorgungsnetze gedacht. Im Falle eines Fehlers muss der USV-Betrieb wieder aktiviert werden, wobei der Wartungsbypass getrennt wird und die Schaltkomponente für den USV-Betrieb aktiviert bzw. deren Schalter geschlossen wird.

Eine weitere Möglichkeit des netzdienlichen Betriebs kann dadurch ermöglicht werden, dass der Wartungsbypass geöffnet wird. Der Umrichter kann deaktiviert werden bzw. der Schalter geöffnet werden und der Wechselrichter erhält ein Stellsignal von der Steuereinheit. Die Schaltkomponente ist ebenfalls aktiv und ein Leistungsfluss von dem Energiespeicher zu dem zweiten Netzanschluss ist möglich. Ein Laden von dem ersten Netzanschluss kann dadurch ermöglicht sein, dass der Wechselrichter deaktiviert wird und der Umrichter von der Steuereinheit ebenfalls zum Leistungsbezug über den ersten Netzanschluss angesteuert wird. Die Schaltkomponente ist dabei deaktiviert und der Energiespeicher kann geladen werden.

Auch hier wird im Fall eines Fehlers der zuvor beschriebene USV-Betrieb wieder aufgenommen.

Für einen netzdienlichen Betrieb am ersten Netzanschluss kann es sinnvoll sein, den Wartungsbypass zu öffnen. Ferner kann der Wechselrichter deaktiviert sein. Der Energiespeicher ist über den Umrichter mit dem ersten Netzanschluss verbunden. Der Umrichter kann einerseits derart betrieben werden, dass ein Leistungsfluss von dem Netzanschluss in Richtung des Energiespeichers fließt und dieser geladen wird. Auf der anderen Seite kann der Energiespeicher entladen werden und ein Leistungsfluss kann ebenfalls über den Umrichter in Richtung des ersten Netzanschlusses erfolgen. Der Umrichter empfängt ein Stellsignal von der Steuereinheit und kann dabei eine Leistungsaufnahme einstellen. Auf der anderen Seite kann im Falle des Entladens der Umrichter ausgangsseitig sowohl ein Spannungsniveau als auch ein Frequenzniveau und/oder eine Phasenlage zwischen Spannung und Strom einstellen und somit zur Frequenzstabilisierung im Rahmen der Primärregelleistung und/oder zur Blindleistungskompensation eingesetzt werden.

Im Falle eines Fehlers ist wiederum der USV-Betrieb wie oben beschrieben möglich.

Ist ein Betrieb der USV gemäß Kategorie 3 möglich, so kann die Schaltkomponente, am zweiten Netzanschluss für die Versorgung der Last dienen. Auf der anderen Seite kann der Wechselrichter inaktiviert sein und ein Laden und Entladen über den Umrichter an dem ersten Netzanschlusspunkt ermöglicht sein.

Auch ist es möglich, die USV in der Kategorie 1 und gleichzeitig netzdienlich zu betreiben. Hierzu kann die Last über die Schaltkomponente, die aus einer Reihenschaltung aus Gleichrichter und Wechselrichter gebildet sein kann und gleichzeitig über den an dem ersten Netzanschluss angeordneten Wechselrichter betrieben sein.

Mit Hilfe von Umrichtern, z.B. Gleichrichtern und/oder Gleichspannungswandler kann das Laden und Entladen des Energiespeichers gesteuert werden. Abhängig von einem Stellsignal kann der Umrichter ein Laden und Entladen des Energiespeichers ermöglichen, wobei ebenfalls ein Durchleiten der elektrischen Leistung in Richtung des Lastanschlusses ermöglichst ist. Hierbei kann die Last auch zu 100% über den Wechselrichter gespeist werden.

Ferner ist es möglich, nur über den Umrichter die Last vom ersten Netzanschluss zu versorgen und die USV in Kategorie 1 zu betreiben. Hierzu kann das Laden und Entladen des Energiespeichers über den Umrichter realisiert sein. Der Umrichter kann hier vorzugsweise größer dimensioniert sein.

Nachfolgend wird der Gegenstand anhand einer Ausführungsbeispiele zeigenden Zeichnung näher erläutert. In der Zeichnung zeigen:
- Fig. 1: ein schematischer Aufbau einer USV im Normalbetriebsfall;
- Fig. 2: ein netzdienlicher Betrieb einer USV gemäß einem ersten Ausführungsbeispiel;
- Fig. 3: ein netzdienlicher Betrieb einer USV gemäß einem zweiten Ausführungsbeispiel;
- Fig. 4: ein netzdienlicher Betrieb einer USV gemäß einem dritten Ausführungsbeispiel;
- Fig. 5: ein netzdienlicher Betrieb einer USV gemäß einem vierten Ausführungsbeispiel;
- Fig. 6: der Betrieb einer USV gemäß einem fünften Ausführungsbeispiel;
- Fig. 7: der Betrieb einer USV gemäß einem sechsten Ausführungsbeispiel.

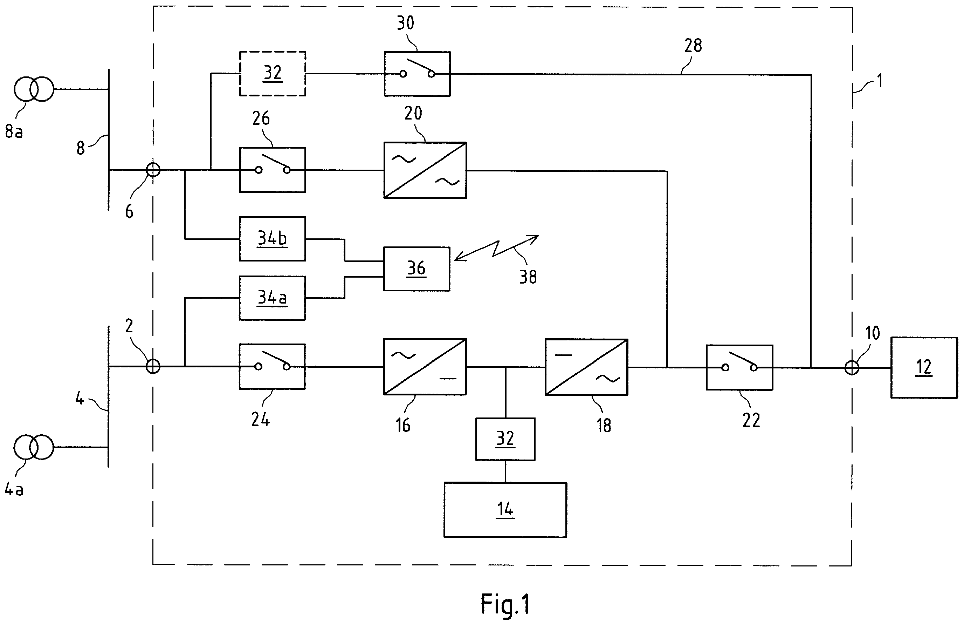

In den Figs. 1 bis 7 sind beispielhafte Topologien von USVen dargestellt. Die gezeigten Komponenten und Elemente können, auch wenn sie in einigen der Figuren nicht gezeigt, in allen Topologien zum Einsatz kommen. Teilweise wurden der Übersichtlichkeit halber einige Komponenten und Elemente in einigen Figuren ausgelassen, was jedoch nicht bedeutet, dass diese Elemente in entsprechenden Topologien nicht zum Einsatz kommen können.

Fig. 1 zeigt eine Topologie einer USV 1, welche einen automatischen Bypass und einen Wartungsbypass besitzt. Die USV 1 ist mit einem ersten Netzanschluss 2 an ein erstes Versorgungsnetz 4 angeschlossen. Das Versorgungsnetz 4 ist über einen Transformator 4a beispielsweise einen Ortsnetztransformator an einen Mittelspannungsnetz angeschlossen.

Die USV 1 ist mit einem zweiten Netzanschluss 6 an ein zweites Versorgungsnetz 8 angeschlossen. Das zweite Versorgungsnetz 8 ist über einen Transformator 8a ebenfalls an das Mittelspannungsnetz angeschlossen. Die Transformatoren 4a, 8a werden vorzugsweise unabhängig voneinander betrieben.

Ein Lastanschluss 10 ist ausgangsseitig der USV 1 vorgesehen. An den Lastanschluss 10 lässt sich eine Last, beispielsweise eine Verbrauchergruppe in einem Rechenzentrum 12 anschließen.

Die USV 1 zeichnet sich dadurch aus, dass die Last 12 an dem Lastanschluss 10 betriebssicher an den Versorgungsnetzen 4, 8 angeschlossen ist, so dass möglichst keine Frequenz- oder Spannungsschwankungen außerhalb zulässigen Bereichen am Lastanschluss 10 auftreten und somit die Last 12 möglichst störungsfrei arbeiten kann.

Hierzu weist die USV 1 einen Energiespeicher 14 auf. Der Energiespeicher 14 kann beispielsweise ein Satz von Akkumulatoren (Batterien) sein. Insbesondere Lithium-Ionen-Batterien können zum Einsatz kommen.

Der Energiespeicher 14 ist netzseitig mit einem Umrichter 16 verbunden und lastseitig mit einem Wechselrichter 18. Der Umrichter 16 kann je nach Bedarf als Gleichrichter gebildet sein oder als bidirektionaler Umrichter, der sowohl Leistungsflüsse in Richtung des Versorgungsnetzes 4 ermöglicht als auch Leistungsflüsse in Richtung des Energiespeichers 14 bzw. des Wechselrichters 18.

An dem Netzanschluss 6 ist eine Schaltkomponente 20 angeordnet, die als Schalter beispielsweise ein bidirektionaler Thyristorschalter oder auch als eine Kombination aus einem Wechselrichter und einem Gleichrichter gebildet sein kann. Die Struktur der Schaltkomponente 20 kann je nach Anwendungsfall unterschiedlich sein, was nachfolgend noch beschrieben werden wird.

Am Schaltausgang 10 kann ein Schalter 22 angeordnet sein.

Eingangsseitig des Umrichters 16 kann ein Schalter 24 angeordnet sein und eingangsseitig der Schaltkomponente 20 kann ein Schalter 26 angeordnet sein

Ausgangsseitig des Schalters 22 zwischen dem Schalter 22 und dem Lastanschluss 10 kann ein Wartungsbypass 28 vorgesehen sein. Der Wartungsbypass 28 verbindet den Lastanschluss 10 mit dem Netzanschluss 6. Der Wartungsbypass 28 verfügt vorzugsweise über einen Schalter 30, der sowohl ein manueller Schalter als auch ein automatisch betriebener Schalter sein kann.

Darüber hinaus kann in dem Wartungsbypass 28 ein Messgerät 32, insbesondere ein Smart Meter 32 (gestrichelt) vorgesehen sein. Das Smart Meter 32 kann insbesondere dann zum Einsatz kommen, wenn Leistungsflüsse von dem Energiespeicher 14 in Richtung des zweiten Versorgungsnetzes 8 geschaltet werden. Für die Erfassung der Ladevorgänge des Energiespeichers kann alternativ oder kumulativ ein Messgerät 32 an dem Energiespeicher 14 vorgesehen sein. Dass Messgerät 32 kann vorzugsweise ein Stromzähler bzw. ein Smart Meter 32 sein. Das Messgerät 32 kann am Eingang des Energiespeichers 14 installiert sein und kann somit alle Ladevorgänge des Energiespeichers 14 registrieren. Damit können alle Einsätze des Energiespeichers 14 erfasst werden.

Für einen netzdienlichen Betrieb können Messeinrichtungen 34a, 34b vorgesehen sein, die jeweils elektrische Parameter an den Netzanschlüssen 2, 4 messen. Die Messeinrichtung 34a, b können Frequenzmesser, Spannungsmesser und/oder beides sein. Mit Hilfe von Frequenzmessern lässt sich die Netzfrequenz an den Netzanschlüssen 2, 6 messen und somit erfassen, ob Primärregelleistung abgerufen werden muss oder nicht. Primärregelleistung wird vorzugsweise lokal autonom abgerufen. Hierzu ist eine lokale Frequenzmessung mit Hilfe der Messeinrichtung 34a, b notwendig. Auch Spannungsmessungen mit Hilfe der Messeinrichtung 34a, b können sinnvoll sein, um beispielsweise die lokalen Spannungsniveaus an den Netzanschlüssen 2, 6 zu messen und gegebenenfalls regulierend eingreifen zu können.

Die Messergebnisse der Messeinrichtungen 34 werden vorzugsweise an eine Steuereinheit 36 übermittelt. In der Steuereinheit 36 kann eine Auswertung der Messergebnisse erfolgen und ein Schalten der Komponenten 14-32 erfolgen. Hierzu kann die Steuereinheit je nach Bedarf mit den jeweiligen Komponenten 14-32 in Wirkverbindung stehen. Die Steuereinheit 36 kann darüber hinaus durch ein externes Steuersignal 38 angesteuert werden. Dies kann beispielsweise für den Abruf von Minuten- oder Sekundenreserven sinnvoll sein oder der Abruf von auktionierten elektrischen Leistungen zu bestimmten Zeitpunkten. Dazu kann ein entsprechendes Steuersignal 38 die Steuereinheit 36 anweisen, dass der Energiespeicher 14 beladen oder entladen wird und die Versorgungsnetze entsprechend belastet oder entlastet. Hierbei kann ein Leistungsfluss aus dem Energiespeicher 14 in Richtung oder aus Richtung zumindest eines der Netzanschlüsse 2, 6 und/oder der Last 12 fließen.

Im Normalbetrieb wird die Last 12 entweder unmittelbar über die Schaltkomponente 20 mit dem Netzanschluss 6 verbunden und von dem zweiten Versorgungsnetz 8 betrieben oder über den Umrichter 16 und den Wechselrichter 18 von dem Versorgungsnetz 4 betrieben. Durch den Energiespeicher 14 ist eine Notversorgung der Last 12 möglich.

Sind die Stromparameter in dem Versorgungsnetz 8 außerhalb des Toleranzbereich, kann das Versorgungsnetz 4 nach wie vor eine stabile Versorgung der Last 12 ermöglichen, in dem der Wechselrichter 18 unabhängig von der Spannung und der Frequenz an dessen Eingang ausgangsseitig eine konstante Spannung mit einer konstanten Frequenz ausgibt.

Tritt auch in dem Versorgungsnetz 4 ein Problem auf, kann über den Energiespeicher 14 der Wechselrichter 18 betrieben werden und nach wie vor kann der Wechselrichter 18 ausgangsseitig eine konstante Spannung bei einer konstanten Frequenz ausgeben. Somit ist im Normalbetrieb ein Leistungsfluss von dem Netzanschluss 6 zu dem Lastanschluss 10 und/oder von dem Netzanschluss 2 zu dem Lastanschluss 10 möglich. Darüber hinaus kann im Normalbetrieb ein Leistungsfluss von dem Energiespeicher 14 zu dem Lastanschluss 10 geschaltet sein. Die Schalter 22, 24, 26 können im Normalbetrieb geschlossen sein. Der Wartungsbypass 28 ist in Normalbetrieb vorzugsweise geöffnet, in dem der Schalter 30 geöffnet ist. Probleme im Versorgungsnetz können insbesondere Netzausfälle, Spannungsschwankungen, Spannungsspitze, Unterspannungen, Überspannungen, Spannungsstöße, Blitzeinwirkungen, Spannungsbursts, Oberschwingungen und/oder Frequenzschwankungen sein.

Im Fall eines Ausfalls der USV 1, insbesondere wenn eine oder vorzugsweise mehrere der Elemente 16, 18, 20, 22 ausfallen, kann der automatische Bypass aktiviert werden, in dem die Schaltkomponente 20 für die Stromversorgung der Last frei geschaltet wird. Der Wartungsbypass 28 kann genutzt werden, wenn die USV 1 gewartet oder repariert werden muss.

Der Energiespeicher 14 wird im Normalbetrieb jedoch äußerst selten genutzt. Er wird lediglich über den Umrichter 16 von dem Versorgungsnetz 2 nachgeladen, so dass er einen definierten Ladezustand dauerhaft erhält. Im Falle der o.g. Probleme an den Netzanschlüssen 2, 6 wird der Energiespeicher 14 genutzt, um ausgangsseitig des Wechselrichters 18 der Last 12 eine konstante Spannung mit einer konstanten Frequenz zur Verfügung zu stellen. Diese ausschließliche Nutzung des Energiespeichers 14 für die Erhaltung der Versorgung der Last 12 ist unwirtschaftlich und eine Verschwendung von Ressourcen.

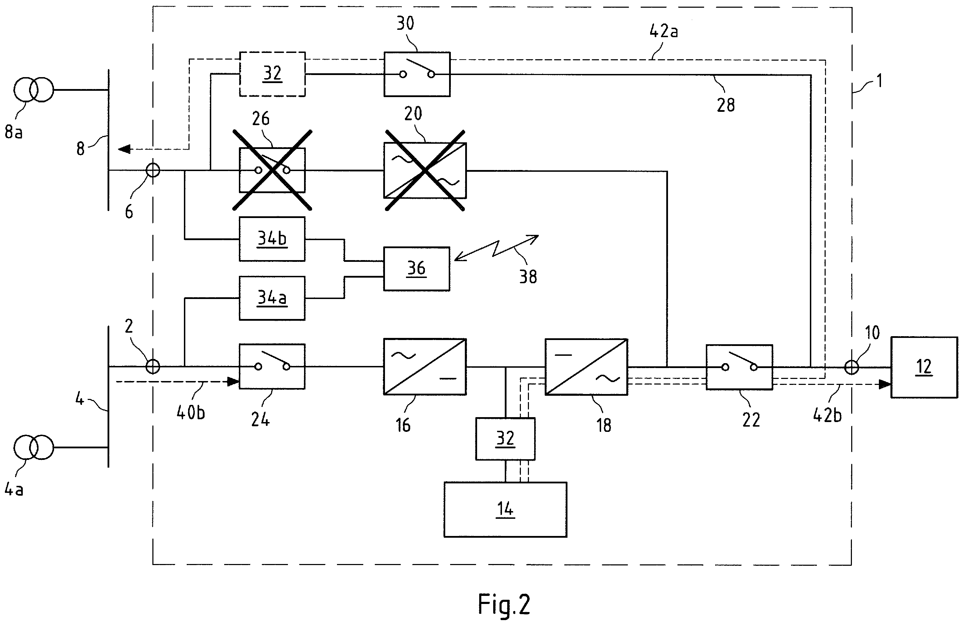

Die Erfinder haben nun erkannt, dass der Energiespeicher 14 einer Mehrfachverwendung zugeführt werden kann. Eine dieser Verwendungen ist in Fig. 2 gezeigt. Gemäß der Fig. 2 kann der Energiespeicher 14 dazu genutzt werden, elektrische Leistung in das Versorgungsnetz 8 einzuspeisen. Hierzu kann der Schalter 26 geöffnet werden oder die Schaltkomponente 20 gesperrt werden. Der Energiespeicher wird über das Versorgungsnetz 4 und den Umrichter 16 geladen und über den Wechselrichter 18 und einen geschlossenen Schalter 30 kann der Energiespeicher 14 entladen werden und ein Leistungsfluss von dem Energiespeicher 14 in Richtung des zweiten Netzanschlusses 6 realisiert werden.

Ein Leistungsfluss 42a fließt vom Energiespeicher 14 zu dem Versorgungsnetz 8. Gleichzeitig kann der Energiespeicher 14 die Last 12 speisen, in dem ein Leistungsfluss 42b zu der Last 12 fließt. Dies führt dazu, dass der Leistungsfluss 40a von dem Versorgungsnetz 4 in Richtung der USV 1 reduziert ist. Der Leistungsfluss 40b kann den Energiespeicher 14 und/oder die Last 12 speisen.

In dem in Fig. 2 gezeigten Beispiel kann der Energiespeicher 14 beispielsweise über das Versorgungsnetz 4 gespeist werden. Hierbei kann der Wechselrichter 18 deaktiviert werden, so dass lediglich ein Leistungsfluss 40 von dem Netzanschluss 2 in Richtung des Energiespeichers 14 möglich ist. Im Falle des Entladens des Energiespeichers 14 kann der Umrichter 16 deaktiviert sein oder der Schalter 24 geöffnet sein, so dass ein Leistungsfluss 42a von dem Energiespeicher 14 über den Wechselrichter 18 und den Wartungsbypass 28 in Richtung des Netzanschlusses 6 fließt.

Da eine Verbindung zwischen dem Energiespeicher 14 und dem Versorgungsnetz 8 besteht, kann ein Leistungsfluss 42a bzw. eine bezogene Energiemenge über das Smart Meter 32 erfasst werden.

In diesem Zusammenhang sei erwähnt, dass die Steuereinheit 36 erfassen kann, wann der Energiespeicher 14 geladen wurde und wann dieser entladen wurde, als auch die entsprechenden Schaltzustände der Komponenten 16, 18. Hierdurch kann beispielsweise im Zusammenhang mit der Erfassung der Frequenzen an den Netzanschlüssen 2, 6 erfasst werden, wann und wie der Energiespeicher 14 Primärregelleistung geliefert hat. Dies ist für alle gezeigten Ausführungsbeispiele möglich.

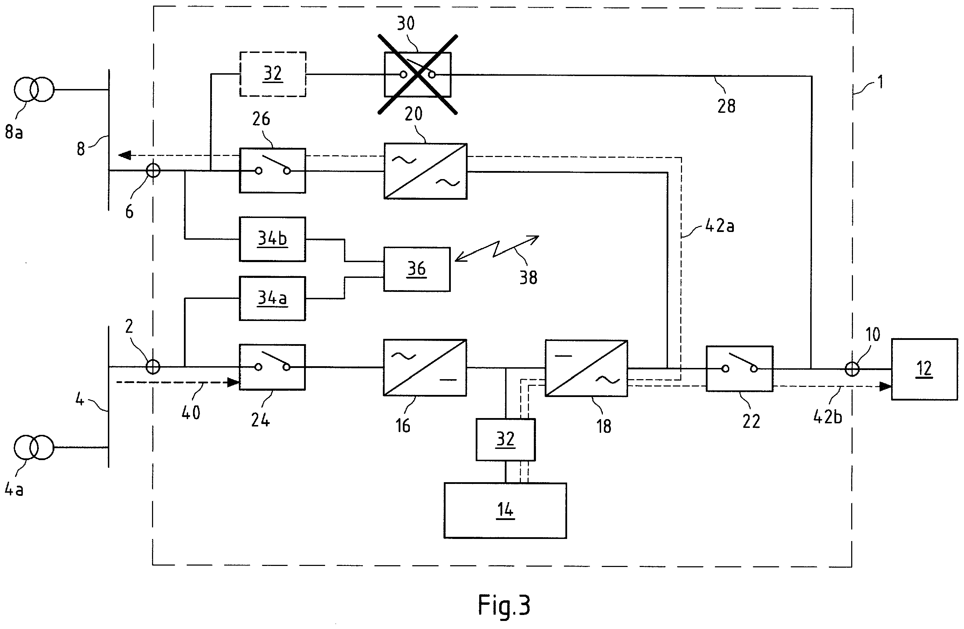

In einem zweiten Anwendungsfall kann der Energiespeicher 14 ebenfalls netzdienlich für das Versorgungsnetz 8 eingesetzt werden, wie Fig. 3 zeigt. In dem Beispiel in Fig. 3 ist der Schalter 30 geöffnet. Das Versorgungsnetz 4 speist den Energiespeicher 14, wie durch den Leistungsfluss 40 dargestellt. Der Schalter 30 kann geöffnet sein und ein Leistungsfluss 42a fließt über den Wechselrichter 18, die Schaltkomponente 20 und den Schalter 26, der geschlossen ist, in Richtung des Netzanschlusses 6. Auch kann der Energiespeicher 14 über den Leistungsfluss 42b die Last 12 speisen.

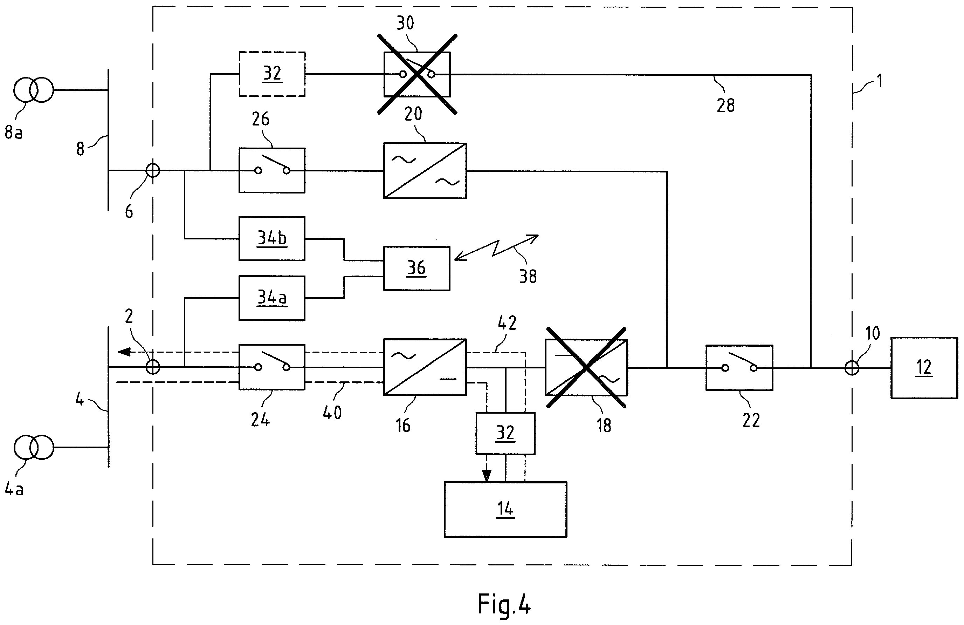

Fig. 4 zeigt einen weiteren Betriebsmodus, bei dem der Energiespeicher 14 netzdienlich für das Versorgungsnetz 4 eingesetzt wird. Im Normalbetriebsfall, d.h. wenn das Versorgungsnetz 4 ordnungsgemäß arbeitet, kann der Energiespeicher 14 über den Umrichter 16 geladen werden, was durch den Leistungsfluss 40 dargestellt wird. Der Wechselrichter 18 ist hierbei deaktiviert. Die Steuereinheit 36 kann den Umrichter entsprechend ansteuern, um den Leistungsfluss 40 einzustellen.
Im Falle des Entladens bleibt der Wechselrichter 18 deaktiviert und der Umrichter speist den Netzanschluss 2, wie durch den Leistungsfluss 42 dargestellt. Auch hier kann der Umrichter 16 einen Steuerbefehl von der Steuereinheit 36 empfangen und insbesondere die Ausgangsfrequenz und die Ausgangsspannung auf der Seite des Netzanschlusses 2 einstellen.

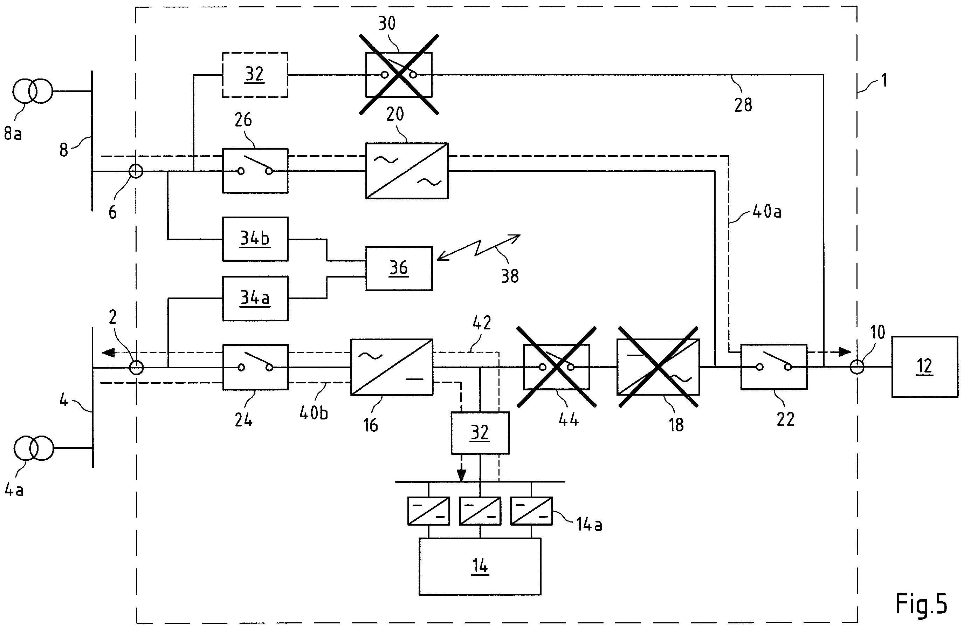

Fig. 5 zeigt ein weiteres Anwendungskonzept, in dem die USV 1 sowohl zum Betrieb der Last 12 genutzt werden kann, als auch netzdienlich eingesetzt werden kann. Über die Schaltkomponente 20 kann bei geöffnetem Schalter 30 und geschlossenem Schalter 26 ein Leistungsfluss 40a in Richtung der Last 12 realisiert sein. Die Last 12 wird dabei spannungs- und frequenzabhängig betrieben, nämlich abhängig von der Spannung der Frequenz an dem Versorgungsnetz 8.

Der Wechselrichter 18 kann deaktiviert sein oder über einen zusätzlichen Schalter 44, der geöffnet sein kann, von dem Energiespeicher 14 getrennt sein.

Der Energiespeicher 14 kann über Gleichstromumrichter 14a betrieben werden. Die Gleichstromumrichter 14a können ebenfalls Steuersignale von der Steuereinheit 36 empfangen. Netzdienlich kann der Energiespeicher 14 an dem Netzanschluss 2 betrieben werden. Im Falle des Ladens kann ein Leistungsfluss 40b von dem Netzanschluss 2 in Richtung des Energiespeichers 14 realisiert werden. Im Falle des Entladens kann ein Leistungsfluss 42 von dem Energiespeicher 14 in Richtung des Netzanschlusses 2 realisiert sein. Der Umrichter 16 empfängt die entsprechenden Stellsignale von der Steuereinheit 36, um die von dem Netzanschluss 2 bezogene Leistung im Fall des Ladens einstellen zu können, als auch um die abgegebene Leistung im Fall des Entladens einstellen zu können. Hierbei kann auch insbesondere eine Ausgangsfrequenz des Umrichters 16 bestimmt werden.

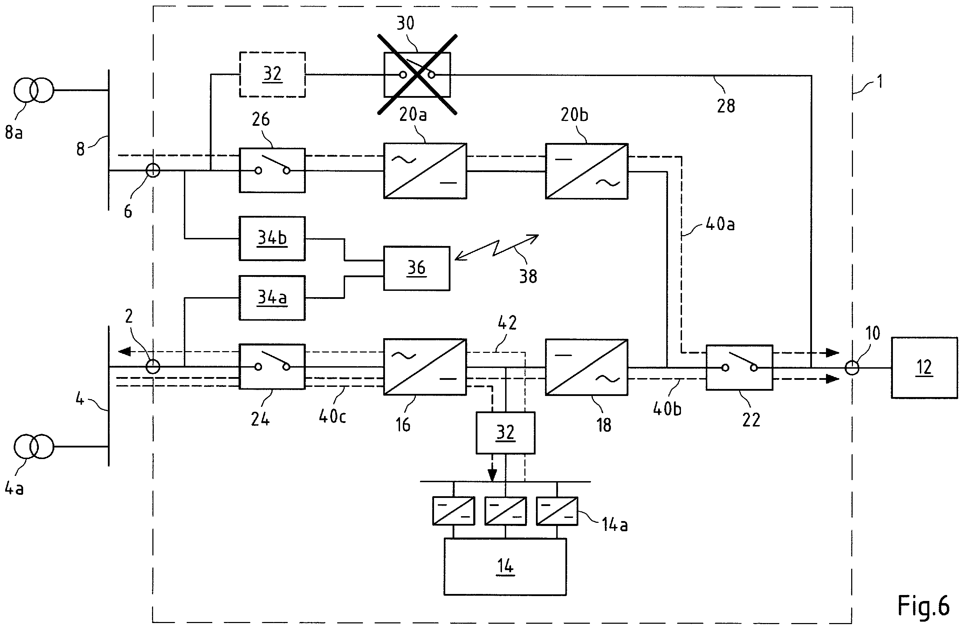

Fig. 6 zeigt eine weitere Möglichkeit des Betriebs der USV 1. Zunächst ist zu erkennen, dass die Schaltkomponente 20 nunmehr aus einem Gleichrichter 20a und einem Wechselrichter 20b gebildet ist, welche beide über die Steuereinheit 36 Stellsignale empfangen können. Ausgangsseitig des Wechselrichters 20b kann eine Ausgangsspannung sowie eine Ausgangsfrequenz eingestellt werden, insbesondere durch die Steuereinheit 36. Die Last 12 lässt sich somit spannungs- und frequenzunabhängig durch die Leistungsflüsse 40a, 40b betreiben, wobei ausgangsseitig des Wechselrichters 20b eine Spannung und eine Frequenz einstellbar ist, als auch ausgangsseitig des Wechselrichters 18. Somit wird die Last 12 durch die beiden Versorgungsnetze 4, 8 gespeist, wobei durch Ansteuerung durch die Steuereinheit 36 der jeweilige Anteil an der Gesamtlast durch das Versorgungsnetz 4 bzw. das Versorgungsnetz 8 einstellbar ist. Natürlich kann die Last auch ausschließlich vom Versorgungsnetz 4 oder Versorgungsnetz 8 versorgt werden.

Auch kann, wie durch die Leistungsflüsse 40c (wenn der Energiespeicher 14 geladen wird oder die Entladeleistung des Energiespeichers 14 niedriger als die Last 12 ist) und 42 (wenn die Entladeleistung höher als die Last 12 ist) gezeigt, ein Austausch zwischen dem Energiespeicher 14 und dem Versorgungsnetz 4 erfolgen. Ob ein Leistungsbezug erfolgt, entsprechend dem Leistungsfluss 40c oder eine Leistung bereitgestellt wird, entsprechend dem Leistungsfluss 42, kann durch Einstellen des Umrichters 16 gesteuert werden. Die Einstellung des Umrichters 16 kann über die Steuereinheit 36 erfolgen.

Auch kann die USV 1 gemäß der Fig. 6 mit den Leistungsflüssen 40b, c und 42 betrieben werden. Der Umrichter 16 kann dabei sowohl ein Laden als auch ein Entladen des Energiespeichers 14 ermöglichen. Wenn der Umrichter 16 derart geschaltet ist, dass ein Leistungsfluss 40b fließt, kann gleichzeitig der Energiespeicher 14 geladen werden.

Auch ist es möglich, dass die Leistungsaufnahme von dem Versorgungsnetz 4 durch die Last gedrosselt wird, indem der Energiespeicher 14 entladen wird und teilweise die Last mitspeist. In diesem Fall tritt der Leistungsfluss 42 nicht auf, obwohl der Energiespeicher entladen wird.

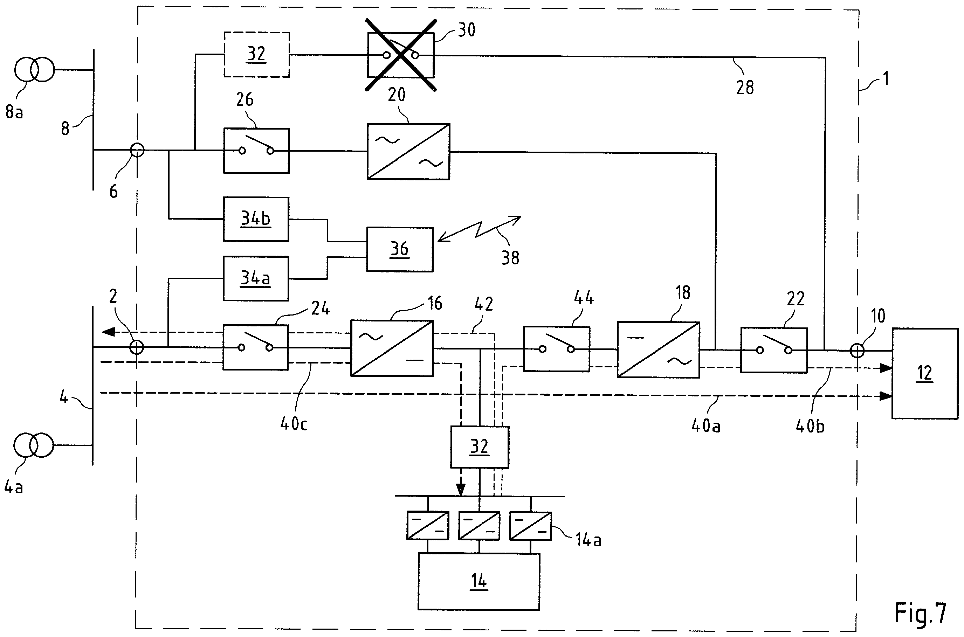

Fig. 7 zeigt noch ein weiteres Anwendungskonzept, in dem die USV 1 sowohl zum Betrieb der Last 12 genutzt werden kann, als auch netzdienlich eingesetzt werden kann. Die Schaltkomponente 20 ist im Normalbetrieb für Leistungsflüsse gesperrt. Die Last 12 kann über den Umrichter 16 und den Wechselrichter 18 (Leistungsfluss 40a) gespeist werden.

Zur Netzdienlichkeit kann der Energiespeicher 14 eingesetzt werden. Dabei kann, wie durch die Leistungsflüsse 40c (wenn der Energiespeicher 14 geladen wird) und 40b (wenn die Entladeleistung des Energiespeichers niedriger als die Last 12 ist) und 42 (wenn die Entladeleistung höher als die Last 12 ist) gezeigt, ein Austausch zwischen dem Energiespeicher 14 und dem Versorgungsnetz 4 erfolgen. Ob ein Leistungsbezug erfolgt, entsprechend dem Leistungsfluss 40c oder eine Leistung bereitgestellt wird, entsprechend den Leistungsflüssen 40b und 42, kann durch Einstellen des Umrichters 16 gesteuert werden. Die Einstellung des Umrichters 16 kann über die Steuereinheit 36 erfolgen.

Auch kann die USV 1 gemäß der Fig. 7 mit den Leistungsflüssen 40b, c und 42 betrieben werden. Der Umrichter 16 kann dabei sowohl ein Laden als auch ein Entladen des Energiespeichers 14 ermöglichen. Wenn der Umrichter 16 derart geschaltet ist, dass ein Leistungsfluss 40b fließt, kann gleichzeitig der Energiespeicher 14 geladen werden.

Auch ist es möglich, dass die Leistungsaufnahme von dem Versorgungsnetz 4 durch die Last 12 gedrosselt wird, indem der Energiespeicher 14 entladen wird und teilweise die Last 12 mitspeist. In diesem Fall tritt der Leistungsfluss 42 nicht auf, obwohl der Energiespeicher entladen wird.

Der Umrichter 16 kann in diesem Anwendungskonzept vorzugsweise größer dimensioniert werden, weil sowohl der Ladestrom für den Energiespeicher 14 als auch der Strom für die Last 12 über den Umrichter 16 fließt.

### Bezugszeichenliste

- 1: Unterbrechungsfreie Stromversorgung (USV)
- 2: Netzanschluss
- 4: Versorgungsnetz
- 4a: Transformator
- 6: Netzanschluss
- 8: Versorgungsnetz
- 8a: Transformator
- 10: Lastanschluss
- 12: Last
- 14: Energiespeicher
- 16: Umrichter
- 18: Wechselrichter
- 20: Schaltkomponente
- 20a: Gleichrichter
- 20b: Wechselrichter
- 22, 24, 26, 30: Schalter
- 28: Wartungsbypass
- 32: Smart Meter
- 34a, b: Messeinrichtung
- 36: Steuereinheit
- 38: Steuersignal
- 40: Leistungsfluss
- 42: Leistungsfluss
- 44: Schalter

## Patentansprüche

1. System mit zumindest einer unterbrechungsfreien Stromversorgung mit
- einem ersten Netzanschluss (2) an einem ersten elektrischen Versorgungsnetz (4),
- eine zweiten Netzanschluss (6) an einem zweiten, von dem ersten elektrischen Versorgungsnetz (4) verschiedenen elektrischen Versorgungsnetz (8),
- einem Lastanschluss (10) für eine elektrische Last, und
- einem Energiespeicher (14),
- wobei zwischen dem Energiespeicher (14) und dem ersten Netzanschluss (2) ein Umrichter (16) angeordnet ist und zwischen dem Energiespeicher (14) und dem Lastanschluss (10) ein Wechselrichter (18) angeordnet ist, und
- zwischen dem zweiten Netzanschluss (6) und dem Lastanschluss (10) eine elektrische Schaltkomponente (20a, 20b) angeordnet ist,
- so dass der erste Netzanschluss (2) und der zweite Netzanschluss (6) an dem Lastanschluss (10) elektrisch angeschlossen sind, wobei
- der Umrichter (16), der Wechselrichter (18) und die Schaltkomponente (20a, 20b) derart geschaltet sind, dass ein elektrischer Leistungsfluss zwischen dem Energiespeicher (14) und zumindest einem der Netzanschlüsse (2, 6) geleitet ist,
**dadurch gekennzeichnet,**
- **dass** die elektrische Schaltkomponente (20a, 20b) eine Reihenschaltung aus einem Gleichrichter (20a) und einem Wechselrichter (20b) enthält und wobei das erste und das zweite elektrische Versorgungsnetz (4, 8) über zwei voneinander getrennt betriebene Transformatoren (4a, 8a) mit einem übergeordneten Versorgungsnetz verbunden sind oder über einen gemeinsamen Einspeisepunkt an einem Transformator verbunden sind.

2. System nach Anspruch 1,
**dadurch gekennzeichnet,**
**dass** am Ausgang des Lastanschlusses ein elektrischer Schalter (22) angeordnet ist.

3. System nach einem der vorangehenden Ansprüche,
**dadurch gekennzeichnet,**
**dass** zwischen dem ersten Netzanschluss (2) und dem Umrichter (16) ein elektrischer Schalter (24) angeordnet ist und/oder dass zwischen dem zweiten Netzanschluss (6) und der elektrischen Schaltkomponente (20a, 20b) ein elektrischer Schalter (26) angeordnet ist.

4. System nach einem der vorangehenden Ansprüche,
**dadurch gekennzeichnet,**
**dass** parallel zu der elektrischen Schaltkomponente (20a, 20b) ein Wartungsbypass (28) zwischen dem Lastanschluss (10) und dem zweiten Netzanschluss (6) geschaltet ist, wobei in dem Wartungsbypass (28) ein Schalter (30) angeordnet ist, insbesondere dass der Wartungsbypass (28) mit dem Ausgang des Lastanschlusses (10) verbunden ist. und/oder dass in dem Wartungsbypass (28) ein Strommessgerät, insbesondere ein Smart Meter angeordnet ist.

5. System nach einem der vorangehenden Ansprüche,
**dadurch gekennzeichnet,**
**dass** der Energiespeicher (14) aus einer Parallelschaltung von zumindest zwei Speichersträngen gebildet ist und dass jeder Speicherstrang über zumindest einen Gleichspannungswandler (14a) mit dem Umrichter (16) verbunden ist.

6. System nach einem der vorangehenden Ansprüche,
**dadurch gekennzeichnet,**
**dass** ein Frequenzmessgerät (34a, 34b) eine Netzfrequenz an zumindest einem der Netzanschlüsse (2, 6) erfasst und dass abhängig von der gemessenen Netzfrequenz ein elektrischer Leistungsfluss zwischen dem Energiespeicher (14) und zumindest einem der Netzanschlüsse (2, 6) geleitet ist.

7. System nach einem der vorangehenden Ansprüche,
**dadurch gekennzeichnet,**
**dass** eine Steuereinheit den Umrichter (16), den Wechselrichter (18), die Schaltkomponente (20a, 20b) und insbesondere die Schalter (24, 30) abhängig von einem externen Steuersignal und/oder der gemessenen Netzfrequenz schaltet.

## Claims

1. System with at least one uninterruptible power supply with
- a first mains connection (2) to a first electrical supply network (4),
- a second mains connection (6) to a second electrical supply network (8) which is different from the first electrical supply network (4),
- a load connection (10) for an electrical load, and
- an energy storage (14),
- wherein a converter (16) is arranged between the energy store (14) and the first mains connection (2), and an inverter (18) is arranged between the energy storage (14) and the load connection (10), and
- an electrical switching component (20a, 20b) is arranged between the second mains connection (6) and the load connection (10),
- so that the first mains connection (2) and the second mains connection (6) are electrically connected to the load connection (10), wherein
- the converter (16), the inverter (18) and the switching component (20a, 20b) are connected such that an electric power flow is conducted between the energy storage (14) and at least one of the mains connections (2, 6),
**characterized in that**
- the electrical switching component (20a, 20b) contains a series circuit comprising a rectifier (20a) and an inverter (20b), and the first and second electrical supply networks (4, 8) being connected to a higher-level supply network via two transformers (4a, 8a) operated separately from one another or being connected to a transformer via a common feed point.

2. System according to claim 1,
**characterized in that**
an electrical switch (22) is arranged at the output of the load connection.

3. System according to one of the preceding claims,
**characterized in that**
an electrical switch (24) is arranged between the first mains connection (2) and the converter (16) and/or **in that** an electrical switch (26) is arranged between the second mains connection (6) and the electrical switching component (20a, 20b).

4. System according to one of the preceding claims,
**characterized in that**
a maintenance bypass (28) is connected in parallel with the electrical switching component (20a, 20b) between the load connection (10) and the second network connection (6), wherein a switch (30) is arranged in the maintenance bypass (28), in particular **in that** the maintenance bypass (28) is connected to the output of the load connection (10), and/or **in that** an ampere meter, in particular a smart meter, is arranged within the maintenance bypass (28).

5. System according to one of the preceding claims,
**characterized in that**
the energy storage (14) is formed from a parallel connection of at least two storage plies, and **in that** each storage ply is connected to the converter (16) via at least one DC voltage converter (14a).

6. System according to one of the preceding claims,
**characterized in that**
a frequency measuring device (34a, 34b) obtains a mains frequency at at least one of the mains connections (2, 6), and **in that** an electrical power flow is conducted between the energy store (14) and at least one of the mains connections (2, 6) as a function of the measured mains frequency.

7. System according to one of the preceding claims,
characterizedin that
a control unit switches the converter (16), the inverter (18), the switching component (20a, 20b) and in particular the switches (24, 30) as a function of an external control signal and/or the measured mains frequency.

## Revendications

1. Système doté d'au moins une alimentation en courant électrique sans coupure, ladite alimentation comprenant :
- un premier raccordement secteur (2) à un premier réseau d'alimentation électrique (4),
- un second raccordement secteur (6) à un second réseau d'alimentation électrique (8) différent du premier réseau d'alimentation électrique (4),
- une borne de charge (10) pour une charge électrique,
- un accumulateur d'énergie(14),
- où un convertisseur (16) est disposé entre l'accumulateur d'énergie (14) et le premier raccordement secteur (2), et un onduleur (18) est disposé entre l'accumulateur d'énergie (14) et la borne de charge (10), et
- un composant de commutation électrique (20a, 20b) est disposé entre le second raccordement secteur (6) et la borne de charge (10),
- de sorte que le premier raccordement secteur (2) et le second raccordement secteur (6) sont raccordés électriquement à la borne de charge (10),
- où le convertisseur (16), l'onduleur (18) et le composant de commutation électrique (20a, 20b) sont commutés de manière telle, qu'un flux de puissance électrique soit dirigé entre l'accumulateur d'énergie (14) et au moins l'un des raccordements secteur (2, 6),
**caractérisé**
- **en ce que** le composant de commutation électrique (20a, 20b) comprend un montage en série se composant d'un redresseur (20a) et d'un onduleur (20b), et où le premier et le second réseau d'alimentation électrique (4) sont raccordés à un réseau d'alimentation prioritaire par deux transformateurs (4a, 8a) fonctionnant séparément l'un de l'autre, ou bien sont raccordés à un transformateur par un point d'alimentation commun.

2. Système selon la revendication 1,
**caractérisé**
**en ce qu'**un interrupteur électrique (22) est disposé au niveau de la sortie de la borne de charge.

3. Système selon l'une des revendications précédentes,
**caractérisé**
**en ce qu'**un interrupteur électrique (24) est disposé entre le premier raccordement secteur (2) et le convertisseur (16) et/ou **en ce qu'**un interrupteur électrique (26) est disposé entre le second raccordement secteur (6) et le composant de commutation électrique (20a, 20b).

4. Système selon l'une quelconque des revendications précédentes,
**caractérisé**
**en ce qu'**une dérivation de service (28) disposée parallèlement au composant de commutation électrique (20a, 20b) est montée entre la borne de charge (10) et le second raccordement secteur (6), où un interrupteur (30) est disposé dans la dérivation de service (28), caractérisé en particulier **en ce que** la dérivation de service (28) est raccordée à la sortie de la borne de charge (10) et/ou **en ce qu'**un ampèremètre, en particulier un compteur intelligent, est disposé dans la dérivation de service (28).

5. Système selon l'une quelconque des revendications précédentes,
**caractérisé**
**en ce que** l'accumulateur d'énergie (14) est formé en se composant d'un montage en parallèle d'au moins deux circuits d'accumulateur, et **en ce que** chaque circuit d'accumulateur est raccordé au convertisseur (16) par au moins un convertisseur continu-continu (14a).

6. Système selon l'une quelconque des revendications précédentes,
**caractérisé**
**en ce qu'**un fréquencemètre (34a, 34b) détecte une fréquence du secteur au niveau d'au moins l'un des raccordements secteur (2, 6), et **en ce que**, en fonction de la fréquence du secteur, qui a été mesurée, un flux de puissance électrique est dirigé entre l'accumulateur d'énergie (14) et au moins l'un des raccordements secteur (2, 6).

7. Système selon l'une quelconque des revendications précédentes,
**caractérisé**
**en ce qu'**une unité de commande, en fonction d'un signal de commande externe et/ou de la fréquence du secteur, qui a été mesurée, commute le convertisseur (16), l'onduleur (18), le composant de commutation électrique (20a, 20b) et en particulier les interrupteurs (24, 30).
